# EUROPÄISCHE PATENTSCHRIFT

(11) **EP 1 728 013 B1**
(45) Veröffentlichungstag und Bekanntmachung des Hinweises auf die Patenterteilung: **20.06.2007**
(21) Anmeldenummer: 05714907.2
(22) Anmeldetag: 29.01.2005
(51) Int. Cl.: F16J 9/26, C23C 4/06, C23C 4/10

(54) **KOLBENRING**
PISTON RING
SEGMENT DE PISTON

(30) Priorität: 26.03.2004 DE 102004014871
(43) Veröffentlichungstag der Anmeldung: 06.12.2006
(73) Patentinhaber: Federal-Mogul Burscheid GmbH, 51399 Burscheid (DE)
(72) Erfinder: HERBST-DEDERICHS, Christian, 51399 Burscheid (DE)
(86) Internationale Anmeldenummer: PCT/DE2005/000138
(87) Internationale Veröffentlichungsnummer: WO 2005/095827

(56) Entgegenhaltungen:
- DE-A1- 10 200 508
- DE-A1- 19 720 627
- US-A- 3 723 259
- PATENT ABSTRACTS OF JAPAN Bd. 006, Nr. 117 (M-139), 30. Juni 1982 (1982-06-30) & JP 57 046048 A (RIKEN CORP), 16. März 1982 (1982-03-16) in der Anmeldung erwähnt

## Beschreibung

Die Erfindung betrifft einen Kolbenring, zumindest beinhaltend eine Lauffläche sowie eine obere und eine untere Flanke.

Der JP-A 57046048 ist ein im Querschnitt rechteckförmiger Kolbenring zu entnehmen, der auf seiner Lauffläche eine thermisch gespritzte Beschichtung auf Basis von Molybdän aufweist. Die Flanken des Kolbenringes sind mit einer Schutzschicht auf Basis von Chrom versehen.

In der DE-A 197 20 627 wird ein beschichteter Kolbenring sowie ein Herstellungsverfahren hierfür beschrieben. Auch wenn die hierin genannte Oberflächengüte der Laufflächenschicht als ausreichend für den Einsatzfall angesehen werden kann, sind die in der genannten Druckschrift beschriebenen Kolbenringe in hochbelasteten Motoren dennoch nicht einsetzbar. Dies im Hinblick darauf, dass auch die Kolbenringflanken einem hohen Verschleiß unterliegen und somit eine eher geringe Standzeit gegeben sein wird.

Auch wenn die JP-A 57046048 bereits bei einem Rechteckring verchromte Flankenbereiche offenbart, so ist diese Problematik nicht ohne weiteres auf trapezförmig ausgebildete Flanken in Verbindung mit einer Laufflächen-Spritzbeschichtung zu übertragen. Dies ist im wesentlichen damit begründet, dass die sauren Chromelektrolyte in die Beschichtung der Lauffläche eindringen und eine Schädigung/Auflösung der Laufflächenbeschichtung erzeugen können. Insofern ist hier weiterer Handlungsbedarf gegeben.

Der Erfindung liegt die Aufgabe zugrunde, einen Kolbenring dahingehend weiterzubilden, dass der Kolbenring auch in hochbelasteten Motoren bei hohen Standzeiten eingesetzt werden kann. Dies soll insbesondere auch bei denjenigen Kolbenringen möglich sein, die im Bereich mindestens einer Flanke zumindest partiell trapezförmig ausgebildet sind. Ferner soll ein Herstellungsverfahren zur Erzeugung derartiger Kolbenringe bereitgestellt werden, mit welchem derartige Kolbenringe in einfacher Form und preiswert erzeugt werden können.

Diese Aufgabe wird gelöst durch einen Kolbenring, zumindest beinhaltend eine Lauffläche sowie eine obere und eine untere Flanke, wobei die Lauffläche eine nach dem sogenannten High-Velocity-Oxy-Fuel (HVOF)-Verfahren aufgebrachte Beschichtung aufweist, die mit einer Oberflächenraueit Rk < 0,12 µm versehen ist.

Vorteilhafte Weiterbildungen des erfindungsgemäßen Kolbenringes sind den zugehörigen gegenständlichen Unteransprüchen zu entnehmen. Der Kolbenring kann hierbei standardgemäß einen rechteckigen Querschnitt aufweisen, wobei jedoch auch Abweichungen davon, wie bespielsweis trapezförmig ausgebildete Flankenbereiche möglich sein können.

Ein Verfahren zur Herstellung eines derartigen Kolbenringes ist dadurch gekennzeichnet, dass mehrere Kolbenringrohlinge zu einem Paket gespannt und die Laufflächen der Kolbenringrohlinge nach dem sogenannten HVOF-Verfahren mit einer thermisch gespritzten Beschichtung versehen werden, die Kolbenringe vereinzelt und im Bereich mindestens einer ihrer Flanken, bedarfsweise einer Trapezbearbeitung unterzogen sowie abschließend zumindest die trapezförmigen Flankenbereiche mit einer galvanisch abgeschiedenen Schutzschicht versehen werden.

Vorteilhafte Weiterbildungen des erfindungsgemäßen Verfahrens sind den zugehörigen verfahrensgemäßen Unteransprüchen zu entnehmen.

Die Lauffläche der Kolbenringe kann bedarfsweise mit einer Kammerung versehen oder durch ein überspritztes Ringprofil mit zylindrischer Laufflächenform ausgebildet werden.

Durch Einstellung einer sehr geringen Porosität von vorteilhafterweise < 5 %, insbesondere < 3 %, wird das Eindringen des galvanischen Elektrolyten in die Laufflächenschicht sicher vermieden, so dass das HVOF-Verfahren bei der Laufflächenbeschichtung von erfindungsgemäßen Kolbenringen hier sicher eingesetzt werden kann. Durch die ebenfalls geringe Oberflächenrauheit von Rk < 0,12 µm wird verhindert, dass Elektrolyt sich in die Oberflächenkapillaren der Laufflächenschicht einlagern und eine oberflächennahe Schädigung der Laufflächenbeschichtung bewirken kann.

Besonders beständige Laufflächenbeschichtungen können im Zusammenhang mit den oben genannten geringen Werten an Porosität und Oberflächenrauheit durch das angewandte HVOF-Verfahren von WC, TiC, CrC oder dergleichen carbidischen Werkstoffen erzielt werden.

Eine nachfolgende Bearbeitung der Kolbenringflanken ist in der Regel dann nicht mehr notwendig, d.h. die harte Chromflanke muss nicht mehr teuer nachbearbeitet werden. Der Kolbenring kann bedarfsweise aus Stahl oder Guss gebildet werden, wobei die Chromschichtstärke gleichmäßig dick auf den Flanken vorgesehen wird, und zwar in Chromschichtstärken zwischen 1 und 20 µm, insbesondere 5 bis 10 µm.

Der Erfindungsgegenstand ist anhand eines Ausführungsbeispiels in der Zeichnung dargestellt und wird wie folgt beschrieben. Es zeigen:
- Figuren 1 bis 3: Unterschiedliche Ausgestaltungsformen von laufflächenbeschichteten Trapezkolbenringen.
- Figur 4: laufflächenbeschichteter Kolbenring mit Rechteckquerschnitt

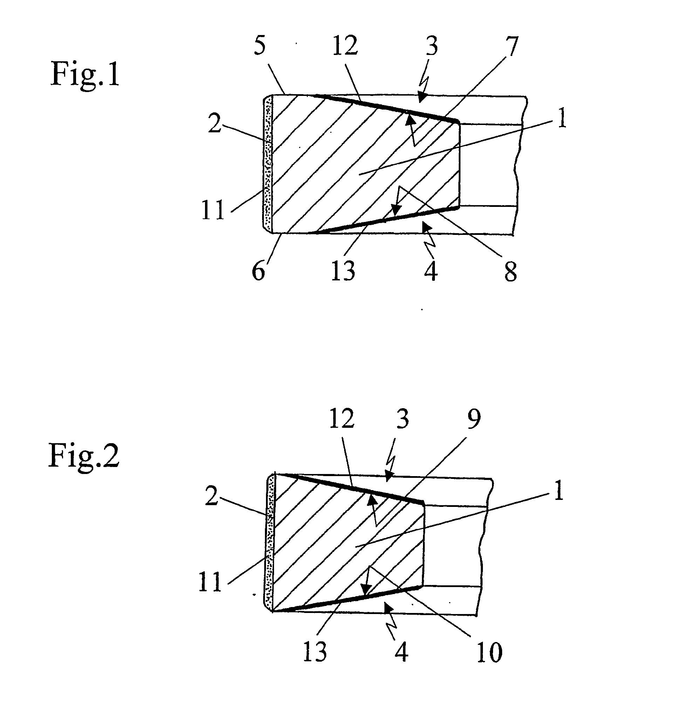

Die in den Figuren 1 bis 3 dargestellten Kolbenringe 1 beinhalten jeweils eine Lauffläche 2 und Flankenbereiche 3, 4, wobei die Flankenbereiche 3, 4 unterschiedlich ausgebildet sein können.

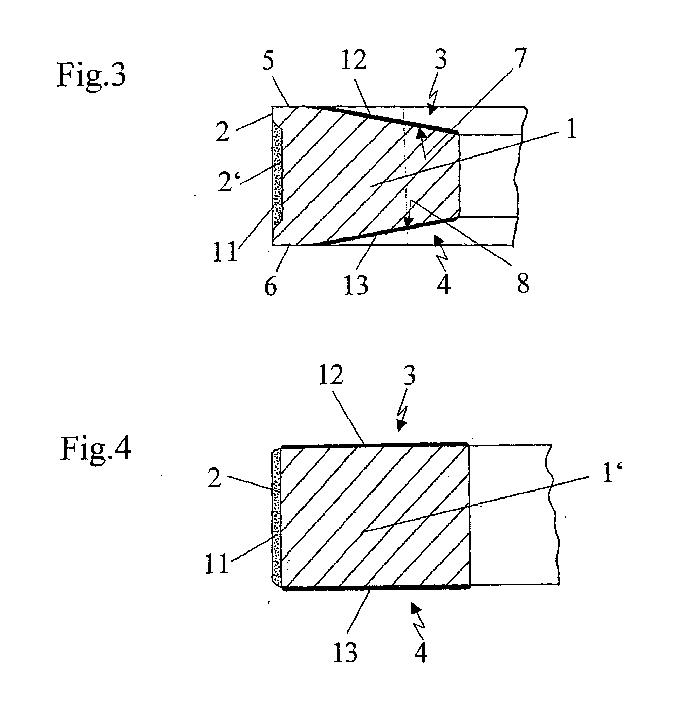

Die Figuren 1 und 3 beinhalten flankenseitig zunächst parallel zueinander verlaufende plane Bereiche 5, 6, die dann anschließend in trapezförmig ausgebildete Bereiche 7, 8 übergehen.

Die Figur 2 zeigt trapezförmig ausgebildete Bereiche 9, 10, die sich unmittelbar an die Lauffläche 2 anschließen.

Während die Kolbenringe 1 gemäß Figuren 1 und 3 in analoger Form, wie in der DE-A 197 20 627 beschrieben, gespannt und nach dem HVOF-Verfahren mit einer thermischen Spritzschicht 11, beispielsweise auf Basis von WC, TiC oder CrC, versehen werden können, wird der Kolbenring 1 gemäß Figur 2 zunächst als Rechteckring ausgebildet und mit einer thermischen Spritzschicht 11 versehen. Hier muss nach erfolgter Beschichtung dann noch eine Trapezbearbeitung vorgenommen werden.

Zumindest die trapezförmig ausgebildeten Bereiche 7, 8 ,9 ,10 werden nach erfolgter Aufbringung der HVOF-Laufflächenbeschichtung 11 mit einer gleichmäßig dicken, galvanisch abgeschiedenen Chromschicht 12, 13 versehen, wobei die Chromschichtdicke in diesen Beispielen 5 µm betragen soll.

Während die Figuren 1 bis 3 zylindrische Laufflächen 2 aufweisen, ist in Figur 3 zusätzlich eine Kammer 2' in die Lauffläche 2 eingebracht, die mit der thermischen Spritzschicht gefüllt ist.

In allen Beispielen werden die thermisch gespritzten Laufflächenbereiche 11 mit Porositäten von 3 % und einer Oberflächenraueit von Rk 0,10 µm, gemessen in axialer Richtung, ausgebildet, so dass ein Eindringen des galvanischen Elektrolyten bei der Abscheidung der Chromschicht 12,13 auf den Flankenbereichen 3, 4 in die thermische Spritzschicht 11 in jedem Fall vermieden wird.

Figur 4 zeigt einen Kolbenring 1', der in analoger Weise, wie in den Figuren 1 bis 3 beschrieben, über eine Lauffläche 2 sowie einen oberen und einen unteren Flankenbereich 3, 4 verfügt. Die Lauffläche 2 ist nach dem HVOF-Verfahren mit einer thermischen Spritzschicht 11, bespielseise auf Basis von TiC beschichtet. Der Kolbenring 1' hat eine rechteckige Querschnittsform. Die Flankenbereiche 3, 4 weisen eine galvanisch abgeschiedene Chromschicht 12, 13 auf.

## Patentansprüche

1. Kolbenring, zumindest beinhaltend eine Lauffläche (2) sowie eine obere und eine untere Flanke (3, 4), wobei die Lauffläche (2) eine nach dem sogenannten High-Velocity-Oxy-Fuel(HVOF)-Verfahren aufgebrachte Beschichtung (11) aufweist, **dadurch gekennzeichnet, daß** sie mit einer axial und in Umfangsrichtung gemessenen Oberflächenrauheit Rk < 0,12 µm versehen ist.

2. Kolbenring nach Anspruch 1, **dadurch gekennzeichnet, dass** die Beschichtung (11) mit einer Oberflächenrauheit von Rk < 0,10 µm, inbesondere von Rk < 0,08 µm versehen ist.

3. Kolbenring nach Anspruch 1 bis 2, **dadurch gekennzeichnet, dass** die Beschichtung (11) auf Basis carbidischer Werkstoffe gebildet ist.

4. Kolbenring nach Anspruch 1 oder 3, **dadurch gekennzeichnet, dass** die Beschichtung (11) auf Basis von WC und/oder TiC und/oder CrC gebildet ist.

5. Kolbenring nach einem der Ansprüche 1 bis 4, **dadurch gekennzeichnet, dass** die Beschichtung (11) eine Porosität < 5 % aufweist.

6. Kolbenring nach einem der Ansprüche 1 bis 5, **dadurch gekennzeichnet, dass** zumindest eine der Flankenbereich (3, 4) zumindest partiell trapezförmig ausgebildet ist.

7. Kolbenring nach einem der Ansprüche 1 bis 6, **dadurch gekennzeichnet, dass** zumindest der trapezförmig ausgebildete Flankenbereich (7, 8, 9, 10) mit einer galvanischen Schutzschicht (12, 13) versehen ist.

8. Kolbenring nach einem der Ansprüche 1 bis 7, **dadurch gekennzeichnet, dass** die galvanische Schutzschicht (12, 13) aufBais von Chrom gebildet ist.

9. Kolbenring nach einem der Ansprüche 1 bis 8, **dadurch gekennzeichnet, dass** die Schichtdicke der Chromschicht (12, 13) zwischen 1 und 20 µm beträgt.

10. Verfahren zur Herstellung eines Kolbenringes gemäß einem der Ansprüche 1 bis 9, **dadurch gekennzeichnet, dass** mehrere Kolbenringrohlinge zu einem Paket gespannt und die Laufflächen (2) der Kolbenringrohlinge nach dem sogenannten HVOF-Verfahren mit einer thermisch gespritzten Beschichtung (11) versehen werden, die Kolbenringe (1) vereinzelt und im Bereich mindestens einer ihrer Flanken (3, 4) bedarfsweise einer Trapezbearbeitung unterzogen sowie abschließend zumindest die trapezförmigen Flankenbereiche (7, 8, 9, 10) mit einer galvanisch abgeschiedenen Schutzschicht (12, 13) versehen werden.

11. Verfahren nach Anspruch 10, **dadurch gekennzeichnet, dass** bei der Aufbringung der Beschichtung (11) eine Porosität < 5 % und eine Oberflächenrauheit, gemessen in axialer Richtung, Rk < 0,10 µm in der Beschichtung (11) eingestellt wird.

12. Verfahren nach einem der Ansprüche 10 oder 11, **dadurch gekennzeichnet, dass** die jeweiligen trapezförmigen Flankenbereiche (7, 8, 9, 10) mit einer gleichmäßig dicken Chromschicht (11, 12) mit einer Schichtdicke zwischen 1 und 20 µm versehen werden.

## Claims

1. Piston ring at least comprising one running face (2) as well as an upper and a lower flank (3, 4), wherein the running face (2) has a coating (11) which is applied according to the so-called High Velocity Oxy-Fuel (HVOF) method, **characterised in that** it is given a surface roughness Rk < 0.12 µm, measured axially and in the circumferential direction.

2. Piston ring according to claim 1, **characterised in that** the coating (11) is given a surface roughness of Rk < 0.10 µm, in particular of Rk < 0.08 µm.

3. Piston ring according to claims 1 to 2, **characterised in that** the coating (11) is formed on the basis of carbidic materials.

4. Piston ring according to claim 1 or 3, **characterised in that** the coating (11) is formed on the basis of WC and/or TiC and/or CrC.

5. Piston ring according to any one of claims 1 to 4, **characterised in that** the coating (11) has a porosity < 5%.

6. Piston ring according to any one of claims 1 to 5, **characterised in that** at least one of the flank regions (3, 4) is at least partially trapezoidal.

7. Piston ring according to any one of claims 1 to 6, **characterised in that** at least the trapezoidal flank region (7, 8, 9, 10) is provided with an electrodeposited protective layer (12, 13).

8. Piston ring according to any one of claims 1 to 7, **characterised in that** the electrodeposited protective layer (12, 13) is formed on the basis of chromium.

9. Piston ring according to any one of claims 1 to 8, **characterised in that** the layer thickness of the chromium layer (12, 13) is between 1 and 20 µm.

10. Method for manufacturing a piston ring according to any one of claims 1 to 9, **characterised in that** a plurality of piston ring blanks are clamped to form a pack and the running faces (2) of the piston ring blanks are provided with a thermally sprayed coating (11) according to the so-called HVOF method, the piston rings (1) are separated, subjected to trapezoidal machining, if required, in the region of at least one of their flanks (3, 4) and, finally, at least the trapezoidal flank regions (7, 8, 9, 10) are provided with an electrodeposited protective layer (12, 13).

11. Method according to claim 10, **characterised in that** a porosity < 5 % and a surface roughness, measured in the axial direction, Rk < 0.10 µm in the coating (11) is set when applying the coating (11).

12. Method according to either of claims 10 and 11, **characterised in that** the respective trapezoidal flank regions (7, 8, 9, 10) are provided with a chromium layer (11, 12) of a uniform thickness with a layer thickness between 1 and 20 µm.

## Revendications

1. Segment de piston comportant au moins une surface de glissement (2), ainsi qu'un flanc supérieur (3) et un flanc inférieur (4), un revêtement (11) étant déposé sur la surface de glissement (2) selon le procédé High-Velocity-Oxy-Fuel (HVOF), **caractérisé en ce que** ledit revêtement a une rugosité de surface Rk, mesurée dans le sens axial et dans le sens périphérique, inférieure à 0,12 µm.

2. Segment de piston selon la revendication 1, **caractérisé en ce que** le revêtement (11) a une rugosité de surface Rk inférieure à 0, 10 µm, en particulier inférieure à 0,08 µm.

3. Segment de piston selon l'une quelconque des revendications 1 à 2, **caractérisé en ce que** le revêtement (11) est formé à base de matériaux carburés.

4. Segment de piston selon la revendication 1 ou 3, **caractérisé en ce que** le revêtement (11) est formé à base de WC et/ou de TiC et/ou de CrC.

5. Segment de piston selon l'une quelconque des revendications 1 à 4, **caractérisé en ce que** le revêtement (11) a une porosité inférieure à 5 %.

6. Segment de piston selon l'une quelconque des revendications 1 à 5, **caractérisé en ce qu'**au moins l'une des zones de flanc (3, 4) est réalisée au moins partiellement en forme de trapèze.

7. Segment de piston selon l'une quelconque des revendications 1 à 6, **caractérisé en ce qu'**au moins la zone de flanc (7, 8, 9, 10) réalisée en forme de trapèze est revêtue d'une couche de protection (12, 13) déposée par voie électrolytique.

8. Segment de piston selon l'une quelconque des revendications 1 à 7, **caractérisé en ce que** la couche de protection (12, 13) déposée par voie électrolytique est formé à base de chrome.

9. Segment de piston selon l'une quelconque des revendications 1 à 8, **caractérisé en ce que** la couche de chrome (12, 13) a une épaisseur entre 1 et 20 µm.

10. Procédé de réalisation d'un segment de piston selon l'une quelconque des revendications 1 à 9, **caractérisé en ce que** plusieurs ébauches de segments de piston sont serrées ensemble pour former un paquet et un revêtement (11) est déposé par projection thermique selon le procédé HVOF sur les surfaces de glissement (2) des ébauches de segments de piston, les segments de piston (1) sont séparés les uns des autres et, en cas de besoin, sont soumis dans la zone d'au moins un de leurs flancs (3, 4) à un usinage pour la réalisation d'un trapèze et, finalement, une couche de protection (12, 13) est déposée par voie électrolytique au moins sur les zones trapézoïdales des flancs (7, 8, 9, 10).

11. Procédé selon la revendication 10, **caractérisé en ce que**, lors de l'application du revêtement (11), le revêtement (11) a été réglé pour une porosité inférieure à 5 % et une rugosité de surface Rk, mesurée dans le sens axial, inférieure à 0,10 µm.

12. Procédé selon la revendication 10 ou 11, **caractérisé en ce que** chacune des zones de flancs (7, 8, 9, 10) trapézoïdales est revêtue d'une couche de chrome (11, 12) d'épaisseur uniforme avec une épaisseur de couche entre 1 et 20 µm.
